# EUROPEAN PATENT SPECIFICATION

(11) **EP 4 538 638 B1**
(45) Date of publication and mention of the grant of the patent: **05.08.2026**
(21) Application number: 24202821.5
(22) Date of filing: 26.09.2024
(51) Int. Cl.: G01C 15/00, G01C 21/20

(54) **GUIDE SYSTEM, GUIDE METHOD, AND GUIDE PROGRAM TO ASSIST WORKER WITH WORK IN WORK SITE**
FÜHRUNGSSYSTEM, FÜHRUNGSVERFAHREN UND FÜHRUNGSPROGRAMM ZUR UNTERSTÜTZUNG EINES ARBEITERS BEI ARBEIT AN EINER ARBEITSSTELLE
SYSTÈME DE GUIDAGE, PROCÉDÉ DE GUIDAGE ET PROGRAMME DE GUIDAGE POUR AIDER UN TRAVAILLEUR À TRAVAILLER DANS UN SITE DE TRAVAIL

(30) Priority: 29.09.2023 JP 2023169997
(43) Date of publication of application: 16.04.2025
(73) Proprietor: TOPCON CORPORATION, Tokyo 174-8580 (JP)
(72) Inventor: SASAKI, Takeshi, Tokyo, 1748580 (JP); FUKAYA, Nobuyuki, Tokyo, 1748580 (JP); SHIGETA, Masahiro, Tokyo, 1748580 (JP)
(74) Representative: Schmitt-Nilson Schraud Waibel Wohlfrom Patentanwälte Partnerschaft mbB

(56) References cited:
- US-A1- 2003 065 446
- US-A1- 2019 094 021
- US-B2- 11 512 956

## Description

### BACKGROUND OF THE INVENTION

### Field of the Invention

The present disclosure relates to a guide to assist a worker with work in a work site.

### Description of the Related Art

A system using a three-dimensional model to support a worker with construction in a site has been conventionally known.

For example, Japanese Patent Laid-Open No. 2020-149546 describes a construction support system for supporting construction to install a member, which constitutes building equipment, on a building. This system uses an image taken with a camera that a worker is wearing to produce three-dimensional shaped data of a workspace while progress of work, calculates a position of the worker by utilizing a three-dimensional composition processing according to a photogrammetry technique, and reads a tag such as a two-dimensional code attached to the member to determine whether there is a newly-matched installed member, even in the interior of the building where radio waves from a GPS satellite do not reach.

An environment where radio waves from a satellite such as GPS hardly reach such as the interior of a building under construction makes it difficult for a worker to confirm his/her current position or intuitively understand a position of a member or a sign that should be installed by the worker.
US 11 512 956 B2 discloses an augmented-reality system combined with a surveying system, to assist a worker with work in a work site, including: a storage unit for storing design information including position information of a scheduled installation. A local map is generated based on a plurality of images acquired by a camera (e.g., of a wearable device). A display of the wearable device can present a virtual object in relation to the environment based on orienting the local map of the wearable device with the environment.
US 2019/094021 A1 discloses a surveying instrument. AR-data may be overlaid onto the real view of the scene which the user has when he is wearing the AR-device.

Thus, the purpose of the present disclosure is to enable a worker to intuitively and instantly understand a work target place from the worker's perspective while ensuring a highly-accurate position measurement in a work site, in a guide system, a guide method, and a guide program to assist the worker with work in the work site.

### SUMMARY OF THE INVENTION

The invention is laid out in the main claims. Advantageous embodiments are laid out in the dependent claims.

### Advantageous Effect of Invention

The use of the guide system according to the present disclosure using the above-described means enables a worker to intuitively and instantly understand a work target place from the worker's perspective while ensuring a highly-accurate position measurement in a work site.

### BRIEF DESCRIPTION OF THE DRAWINGS

FIG. 1 is an overall configuration diagram of a guide system according to one embodiment;
FIG. 2 is a configuration diagram of the guide system;
FIG. 3 is a flowchart of processes of the guide method;
FIG. 4 is an outline diagram for describing an acquisition method of an imaging position;
FIG. 5 is one example of output of guide information;
FIG. 6 is one example of the output of the guide information;

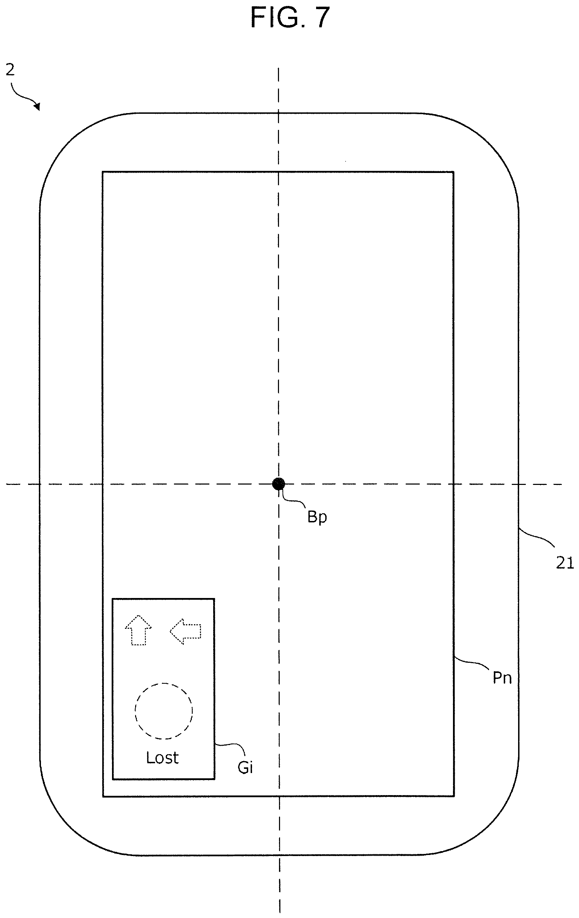

FIG. 7 is one example of the output of the guide information;

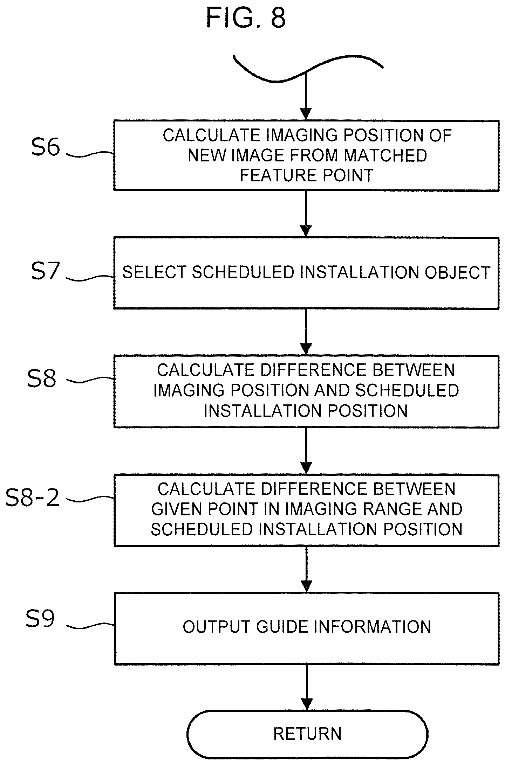

FIG. 8 is a flowchart of processes of the guide method;
FIG. 9 is one example of the output of the guide information; and
FIG. 10 is an overall configuration diagram of a guide system according to a modification.

### DETAILED DESCRIPTION OF THE INVENTION

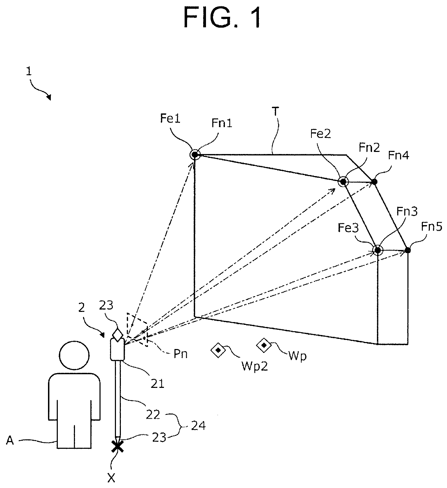

The following describes an embodiment of the present disclosure based on the drawings. FIG. 1 is an overall configuration diagram of a guide system 1 according to an embodiment of the present disclosure. The descriptions of the present embodiment schematically show each apparatus and arrangement relations, and these may differ from the actual scales for the sake of simplicity.

As shown in FIG. 1, the guide system 1 causes a worker A to hold a guide terminal 2 and take pictures while moving, and calculates a position of the guide terminal 2 based on taken images to assist the worker with work by displaying a work target position on the guide terminal 2. In particular, effects can be exhibited in the interior of a building where acquisition of a self-position using a GNSS such as a GPS tends to become difficult.

The guide terminal 2 includes a body part 21. The body part 21 may be held by a rod-shaped part 22, which may, for example, be a pin pole having a pin at the tip. That is to say, the tip of the pin pole has a configuration of contacting one point and being able to support the one point, resulting in a fixed positional relation and a known distance between the tip of the pin pole and the body part 21. Accordingly, contacting the tip of the pin pole to a certain position X and vertically holding the rod-shaped part 22 will naturally result in determination of the position of the body part 21. Moreover, the guide terminal 2 may include a prism 23, which is a retroreflective prism for tracking its position.

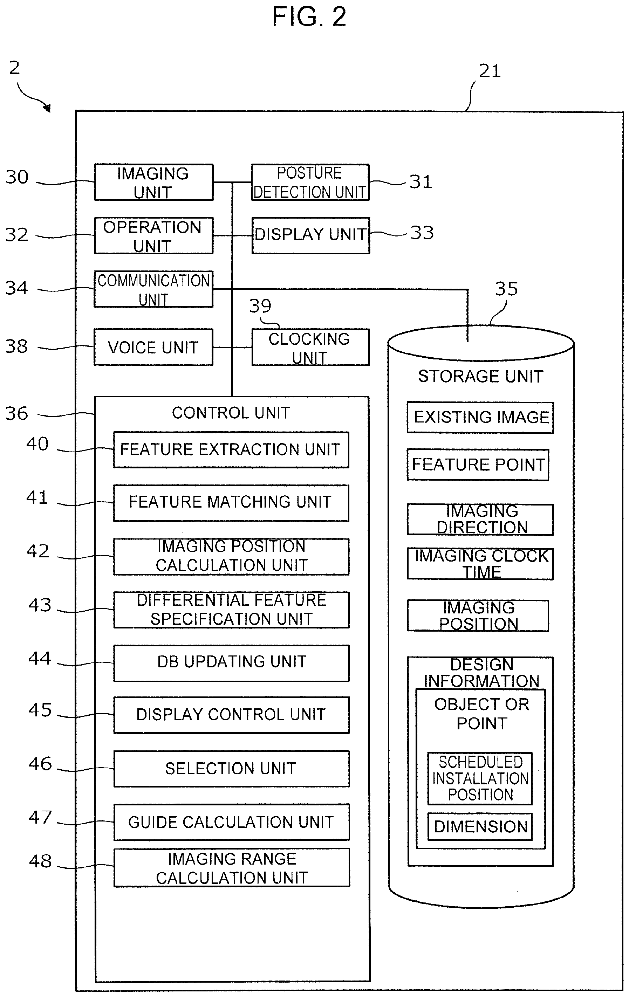

As shown in FIG. 2, the body part 21 has an imaging unit 30, an operation unit 32, a display unit 33, a communication unit 34, a storage unit 35, a voice unit 38, a clocking unit 39, and a control unit 36. In addition, the body part 21 may also have a posture detection unit 31.

The imaging unit 30 is an image sensor (such as a CCD sensor or a CMOS sensor) for capturing an image. The imaging unit 30 may be able to capture both still images and moving images. The present embodiment describes an example of a still image for better understanding of the invention, although the present embodiment is similarly applicable also to a moving image. Moreover, a camera constituting the imaging unit may be a stereo camera, a depth camera, a ToF camera, a LIDAR integrated camera, etc., which will be described later. These cameras have a function of allowing measurement of a distance from an imaging target.

The posture detection unit 31, which may, for example, be an Inertial Measurement Unit (IMU) including an accelerometer and a gyroscope, measures acceleration, angular velocity, etc., and allows acquisition of posture information of the guide terminal 2. For example, the accelerometer allows detection of triaxial acceleration, and the gyroscope allows detection of triaxial angular velocity.

The operation unit 32 is an operation means capable of inputting various operating instructions and settings. The operating instructions can, for example, include instructions such as switching of power ON or OFF, an instruction of taking an image by the imaging unit 30, settings related to imaging, and selection of a work target object, which will be described later. In addition, the operation unit 32 may include other operation devices or input devices such as a switch, a button, and a dial. Moreover, the operation unit 32 may input a voice using a voice unit 38 including a microphone.

The display unit 33 is, for example, a display such as a liquid crystal display or an organic EL display. When the display unit 33 is a touch panel display, the display unit 33 and the operation unit 32 may be integrally formed. Moreover, the display unit 33 may be smartglasses or a head mounted display that a worker is wearing, which is connected to the guide terminal 2.

The communication unit 34, which may, for example, be a radio communication means, has a function of communicating with an external apparatus to allow sharing of information. The communication unit 34 may also function as a wired communication means through a connecting terminal. The external apparatus may, for example, be an apparatus such as a portable personal digital assistant (PDA), a smartphone, a tablet terminal, or a personal computer.

The storage unit 35 is an auxiliary storage such as a hard disk, SSD storing various kinds of information. The storage unit 35 stores design information including a plurality of three-dimensional objects, a three-dimensional model of a building to be constructed made of the plurality of three-dimensional objects, position information of its scheduled installation position in a coordinate system specific to a work site, position information of points in the work site, and a feature point and a feature amount of a building T, which is a site reference object to be used as a reference of the coordinate system specific to the work site, allowing specification of the position of the building T. These feature point and feature amount are stored in association with points included in the three-dimensional model.

Coordinate systems include a global coordinate system/world coordinate system/absolute coordinate system, while the coordinate system specific to the work site in the present disclosure does not necessarily have to be the same as these coordinate systems, and it may be a coordinate system specific to each work site that is managed by using a reference object in the site as a reference. The design information may be Building Information Modeling (BIM), including points for work, position information of scheduled installation positions of objects to be building materials or points, which are installation locations of piles, etc., and for the objects, including dimension information such as its widths, depths, and heights, and information such as IDs and article numbers.

The objects may include a member having a size such as that of building materials. The points may include a location (point) to drive a pile, a location (point) to pile a post, and markers used for installing these as signs. The present disclosure may allow a work target object or a work target point to include a member such as a building material and information representing a location (point) to install a pile or a post. The work target object or the work target point has position information of the scheduled installation position in the coordinate system specific to the work site.

The present disclosure refers to an image including a feature point and a feature amount stored on the storage unit 35, as an existing image. The feature point is a characteristic part (position) shown in the image, and a value obtained by quantifying uniqueness of the feature point with an expression such as vector is referred to as the feature amount. A specific algorithm, which may, for example, be an algorithm such as SIFT, SURF, ORB, or HOG calculates the feature amount. The storage unit 35 stores at least that feature point and its accompanying various kinds of information (data), and a so-called feature point database (hereinafter, also referred to as the DB) is constructed. Moreover, the storage unit 35 may also store the existing image from which the feature point is extracted. For example, a feature point ID and an image ID may be linked and stored together with a position on the image. In this manner, storage may involve linkage allowing specification as to which feature point is extracted from which image and which position. Extraction of the feature point may be expressed as processing also including calculation of the feature point.

For example, the feature point, which includes at least position information in an absolute coordinate system or the coordinate system specific to the work site, is linked with position information (three-dimensional coordinate data) in the global coordinate system (absolute coordinate system) or the coordinate system specific to the work site correspondingly to a position within the existing image. This position information of the feature point is basically based on a result surveyed beforehand with a surveying apparatus such as a surveying instrument (a total station or a scanner), or may be calculated by the control unit 36, which will be described later, using a position analysis, etc., based on the result surveyed by such a surveying apparatus.

In addition, the position information of the feature point is provided with a type of surveying (a total station, a scanner, photographic surveying, etc.) that calculated the position information, installation coordinates of the surveying apparatus, and time data at the time of using the surveying apparatus. For example, points obtained with a LiDAR scanner, etc., have position information between the scanner and a target object, but this position information is a relative position. Thus, surveying information of the absolute coordinate system or the coordinate system specific to the work site acquired in advance with a total station (TS), etc., is used to link and store the above-described coordinates of the points and the feature point stored on the storage unit 35 as position information.

In addition, other kinds of information relating to imaging are also linked to the feature point. The information relating to imaging may, for example, include information including specifications (resolution, angle of view, etc.) of the imaging unit, imaging position information, imaging clock time information, imaging posture information, imaging direction information, and imaging time information. An imaging position calculation unit 42 of the control unit 36, which will be described later, calculates the imaging position information. The posture detection unit 31 detects the posture information at the time of imaging, and a direction of imaging (imaging direction information) is calculated from this posture information. The imaging time information may, for example, be date and time at the time of imaging according to the clocking unit 39 provided for the guide terminal 2.

The control unit 36 executes a function and/or a method implemented by a code or a command included in a program stored on the storage unit 35. The control unit 36, which may, for example, include processors such as a central processing unit (CPU), MPU, GPU, a microprocessor, a processor core, a multiprocessor, ASIC, and FPGA, and may carry out processes disclosed in each embodiment using a logical circuit or a dedicated circuit formed in an integrated circuit, etc. Moreover, these circuits may be constructed by one or a plurality of integrated circuits, and a plurality of processes shown in each embodiment may be carried out by one integrated circuit.

The control unit 36 of the present embodiment has a function of calculating an imaging position and an imaging posture of a newly captured image (new image), and based on that imaging position and imaging posture, outputting guide information for a position to install a work target object selected by a worker. When describing configurations of the functions of the control unit 36 to do so, the control unit 36 has a feature extraction unit 40, a feature matching unit 41, the imaging position calculation unit 42, a differential feature specification unit 43, a DB updating unit 44, a display control unit 45, a selection unit 46, a guide calculation unit 47, and an imaging range calculation unit 48.

The feature extraction unit 40 has a function of extracting feature points from an image. Specifically, a predetermined algorithm for extracting feature points is used to extract the feature points from the new image captured with the imaging unit 30. The feature extraction unit 40 may also impart imaging situation information such as imaging time information to the extracted feature points. Moreover, the information of the feature point database stored on the storage unit 35 may be sequentially updated using information of the feature points acquired from the new image and the existing feature point. As described above, feature points can be extracted not only from still pictures but also from motion pictures. Since motion pictures are chronologically arranged still pictures, feature points can be extracted by analyzing a pre-recorded motion picture file, etc. Feature points can also be continuously extracted from the new image in real-time at a processing speed as fast as possible within the range of the processing capability of hardware calculation resources constituting the control unit 36.

The feature matching unit 41 has a function of extracting, from the storage unit 35, feature points in common with feature points extracted from a new image by matching. The storage unit 35 stores a plurality of feature points (existing feature points) extracted from an existing image, i.e., an image that was captured in the past and simultaneously surveyed by a surveying apparatus while its imaging position was being tracked to be linked with an imaging position and imaging posture information. The feature matching unit 41 has a function of extracting, from these plurality of existing feature points, feature points in common with the feature points extracted from the new image.

More specifically, the feature matching unit 41 has a function of using the plurality of feature points included in the new image to extract a predetermined number or more feature points (common feature point) in common with the feature points included in the new image from among all the existing feature points stored on the storage unit 35, and based on these common feature points, associating positional relations between the new image and the stored existing feature points. This also means that the feature matching unit 41 has a search function of searching feature points similar to the feature points included in the new image from the storage unit 35 by using an indicator representing commonality relating to the feature points such as a feature amount. In this manner, the feature points serving as clues of estimating the imaging position of the new image can be acquired.

The feature matching unit 41 extracts feature points having a feature amount that coincides with or is approximate to that of the existing feature points stored on the storage unit 35 from the feature points of the new image acquired in the manner described above, and matches these common feature points by association one by one. This matching specifies relative positional relations between the existing feature points and the new image. Using the position information provided for the existing feature points, the feature points in the new image having relative positional relations associated with the existing feature points are newly imparted with position information of the imaging position in the absolute coordinate system or the coordinate system specific to the work site (three-dimensional coordinates in the global coordinate system) and imaging posture information.

The imaging position calculation unit 42 has a function of calculating, from feature points of a new image associated with common feature points already imparted with position information, an imaging position and an imaging posture of the new image. Association of a predetermined number or more, specifically three or more, common feature points in the new image with the existing feature points allows calculation of the imaging position and the imaging posture from the relative positional relations between the feature points included in the new image and the existing feature points by using a photogrammetry technique, a vision-based navigation technique, or a predetermined algorithm. Specifically, an algorithm such as SfM or SLAM can be used. That is to say, the imaging position calculation unit 42 can calculate the imaging position and the imaging posture from the associated feature points within the new image regardless of location-based position information such as GNSS and in a situation requiring no marker, etc.

The differential feature specification unit 43 may extract, as differential feature points, feature points different from common feature points and from existing feature points stored on the storage unit 35 from among feature points included in a new image, and newly store these differential feature points on the storage unit 35. Matching the stored differential feature points with new feature points when a new image is captured, allows calculation of its position information.

The DB updating unit 44 may have a function of storing a new image having position information imparted to each feature point, on the storage unit 35 as an existing image. The DB updating unit 44 may sequentially update the feature point database by storing, in addition to the feature points imparted with the position information, information of an imaging position and an imaging posture of the new image including these feature points. In this manner, the new feature points are also entered into the existing feature points imparted with the position information after the update of the feature point database. Each feature point of the new image may also include imaging time information, and the feature point database may chronologically manage the feature points.

The display control unit 45 has a function of producing a three-dimensional image based on existing feature points and/or an existing image stored on the storage unit 35, and displaying the produced three-dimensional image on the display unit 33. For example, once the feature point database is updated in the DB updating unit 44, the display control unit 45 uses newly acquired feature points and an image including these feature points to update the three-dimensional image. Moreover, the display control unit 45 can use the imaging time information imparted to the feature points to produce a three-dimensional image based on the feature points at a predetermined time point in the past, or display three-dimensional images at a plurality of time points in a comparable manner. That is to say, the display control unit 45 can produce three-dimensional images in time series.

The selection unit 46 has a function of selecting a work target object or a work point that should be overlappingly displayed on the new image. Specifically, the worker A can select a work target object or a work point by operating the operation unit 32 of the guide terminal 2 or inputting a voice from the microphone of the voice unit 38. A plurality of work target objects or work points may be selected. The following descriptions mainly use a work target object as an example.

In addition, the display control unit 45 may have a function of suggesting, based on position information of an imaging position of the new image, a work target object that should be selected by the worker A in the selection unit 46 on the display unit 33 to reduce the worker A's burden in the selection using the selection unit 46. The selection unit 46 can calculate distance information between a scheduled installation position of a work target object that should be selected by the worker A and the imaging position of the new image, and suggest a work target object with a short distance. For the suggestion, a name, etc., of a work target object to be a candidate may be displayed on the display unit 33 or may be output as a voice by the voice unit 38. The worker A can select from suggested candidates by an operation of the operation unit 32 to select from the suggested candidates or by a reply with a voice using the microphone of the voice unit 38. This can reduce the worker's burden in the work site.

In addition, the selection unit 46 may also have a function of automatically selecting a work target object that should be selected, based on the position information of the imaging position of the new image to reduce the worker A's burden to make a selection using the selection unit 46. For example, the selection unit 46 can calculate distance information between a scheduled installation position of a work target object that should be selected by the worker A and the imaging position of the new image, and automatically select one work target object having the shortest distance. This can further reduce the worker's burden in the work site.

The guide calculation unit 47 has a function of outputting, to the worker A, based on position information of a scheduled installation position of a work target object selected by the selection unit 46 and position posture information of an imaging position of a new image, guide information of a guide to approach from the imaging position of the new image to the scheduled installation position of the work target object. That is to say, assuming that the imaging position of the new image is a current position of the worker A and specifying its position allows specification of a relative relation to the scheduled installation position of the work target object, and this allows output of the guide information of the guide to approach from the imaging position of the new image to the scheduled installation position of the work target object.

The imaging range calculation unit 48 has a function of calculating an imaging range of a new image or a position at a given point in the imaging range.

The display control unit 45 further has a function of comparing positions within an imaging range in the absolute coordinate system or the coordinate system specific to the work site with a scheduled installation position of a work target object, and if the scheduled installation position of the work target object is included in the imaging range, overlappingly displaying the work target object on a position corresponding to the scheduled installation position of the work target object on the new image displayed on the display unit 33. Specifically, when an acquired new image is displayed on the display unit 33 or an imaging range of the new image can also be successively displayed on the display unit 33, the display range becomes equivalent to the imaging range. At this time, if the work target object to be displayed is at a position that can be displayed within the imaging range, i.e., the display range, its position can be overlappingly displayed on the displayed image. Such processing is enabled by calculation of the position of the imaging range in the absolute coordinate system or the coordinate system specific to the work site.

In addition, the display control unit 45 further has a function of using position information of a scheduled installation position of a work target object and position information of a given point within an imaging range of a new image in the absolute coordinate system or the coordinate system specific to the work site to calculate a difference in distance between the given point within the imaging range and the scheduled installation position of the work target object, and based on this difference in distance, outputting to the worker A, the guide information of the guide to approach from the imaging position of the new image to the scheduled installation position of the work target object. Specifically, such a guide can be output by displaying up, down, left, and right arrows and a specific distance (such as how many meters left) on the display unit 33 or by a voice.

In addition, when the imaging unit 30 is a stereo camera, a depth camera, a ToF camera, a LIDAR integrated camera, etc., and an image of a worker holding a work target object is captured in a new image, by image recognition of a shape of the work target object, calculation of a distance between the image-recognized work target object and the imaging unit 30 (the current position) and a distance between the scheduled installation position and the current position, and calculation of how much the worker needs to move the image-recognized work target object to reach the scheduled installation position, guide information of a guide to approach based on that calculations may be output.

The configurations as above enable the guide system 1 to output the guide information to the worker A using the guide terminal 2.

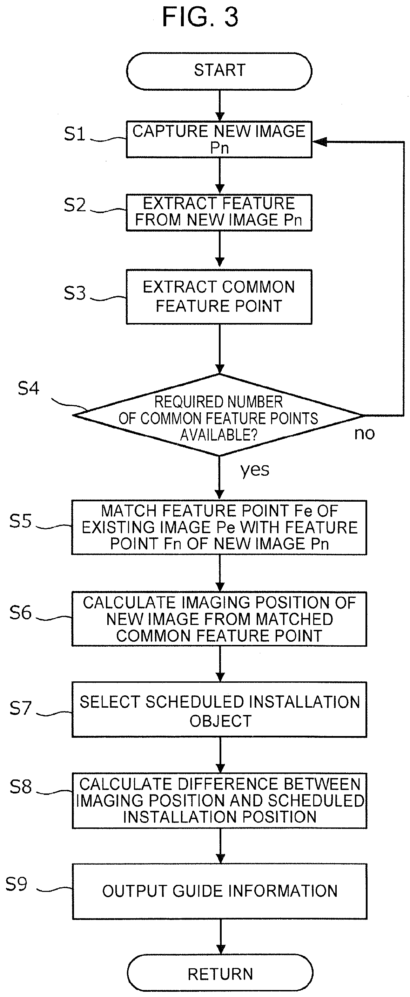

Next, FIG. 3 illustrates a flowchart showing procedures of a guide by the control unit 36, and the following describes a guide method of the present embodiment based on the flowchart while also referring to FIG. 1.

Firstly, as Step S1, the feature extraction unit 40 of the control unit 36 causes the imaging unit 30 to capture a new image Pn. As shown in FIG. 1, the worker A uses the guide terminal 2 at a given survey point X to capture this image according to an operation through the operation unit 32. An attachment position of the imaging unit 30 in the rod-shaped part 22 or the body part 21, etc., are also calculated in a precise sense, but for simplified descriptions, the survey point X is used as the imaging position of the new image.

As Step S2, the feature extraction unit 40 of the control unit 36 extracts feature points from the new image Pn. In addition, the feature extraction unit 40 imparts the extracted feature points with imaging situation information that can be imparted at that time point such as imaging time information. As the feature points of the new image Pn, FIG. 1 shows extraction of five feature points that are feature points Fn1 to Fn5 corresponding to a plurality of corner parts of the building T, which is a site reference object to be used as a reference of an absolute position in the work site.

In Steps S3 to S5, the feature matching unit 41 of the control unit 36 uses the plurality of feature points included in the new image to extract and acquire a predetermined number or more feature points (common feature points) that are in common with the feature points included in the new image from among a plurality of existing feature points stored on the storage unit 35 and already measured as to its position information by a surveying apparatus. Moreover, the common feature points are associated with positional relations between the existing feature points and the feature points included in the new image, and the feature points newly detected as feature points different from the existing feature points are imparted with position information in the absolute coordinate system or the coordinate system specific to the work site based on the position information imparted to the existing feature points.

Thus, in Step S3, the feature matching unit 41 extracts existing feature points in common with the feature points included in the new image from a plurality of existing feature points stored on the storage unit 35.

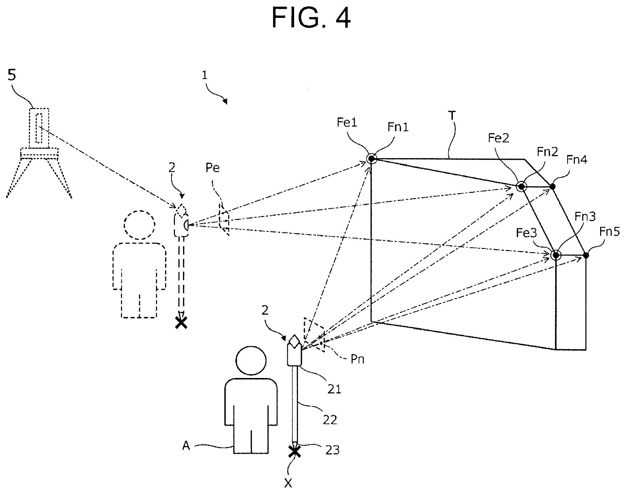

As shown in FIG. 4, the feature matching unit 41 extracts existing feature points Fe1 to Fe3, which are in common with the feature points Fn1 to Fn5 extracted from the building T appearing on the new image.

In Step S4, upon matching the feature points included in the new image with the existing feature points, the feature matching unit 41 determines whether there is a required number or more common feature points between all the existing feature points stored on the storage unit 35 and the feature points included in the new image. No storage of the required number or more common feature points on the storage unit 35 requires capturing of a new image again, and the processing returns to Step S1.

After acquiring the existing feature points in Step S3, if there is a required number or more common feature points in Step S4, the feature matching unit 41 of the control unit 36 matches the existing feature points Fe with the feature points Fn of the new image Pn as Step S5. Specifically, the feature matching unit 41 compares feature amounts of both feature points, and associates the feature points Fe of the existing image Pe with the feature points Fn of the new image Pn corresponding to the same feature points, having coinciding or approximating feature amounts. For example, FIG. 4 shows extracting, from the building T in the existing image Pe and the new image Pn, feature points at coinciding positions between the two images. In FIG. 4, the existing feature points Fe1 to Fe3 of the existing image Pe coincide with the feature points Fn1 to Fn3 of the new image Pn, and the feature matching unit 41 associates the existing feature point Fe1, the existing feature point Fe2, and the existing feature point Fe3 with the feature point Fn1, the feature point Fn2, and the feature point Fn3, respectively, as the common feature points. FIG. 4 shows an example of one existing image Pe including three feature points Fe1 to Fe3, although common feature points of a predetermined number or more only need to be matched with any of all the existing feature points stored on the storage unit 35 not limited to existing feature points extracted from one image.

As Step S6, the imaging position calculation unit 42 of the control unit 36 uses the common feature points of the new image and the existing image associated in Step S5 to calculate an imaging position of the new image. That is to say, as shown in FIG. 4, using the existing feature points Fe1 to 3 having known position information extracted from the existing image Pe captured and acquired beforehand while tracking the prism 23 of the guide terminal 2 with the surveying apparatus 5, the imaging position calculation unit 42 calculates imaging situations such as position coordinates of an imaging position (survey point X) and an imaging posture from the associated feature points Fn1 to Fn3.

In this regard, in Step S6, the differential feature specification unit 43 of the control unit 36 may extract differential feature points not in common with the existing feature points from among the feature points extracted from the new image, and based on the imaging position of the new image calculated in Step S6, may impart the differential feature points with position information with the associated feature points. That is to say, as shown in FIG. 4, the differential feature specification unit 43 may extract, from among the feature points Fn1 to Fn5 included in the new image Pn, differential feature points Fn4, Fn5 which were not associated with the feature points Fe1 to Fe3 of the existing image, and store these on the storage unit 35.

In addition, the DB updating unit 44 of the control unit 36 may update the feature point DB by adding information of the new image Pn to the storage unit 35. Specifically, the DB updating unit 44 may allow addition to the storage unit 35 of the new image Pn, which has the feature points Fn1 to Fn3 associated with the existing feature points Fe1 to Fe3, and the feature points Fn4, Fn5 imparted with information of relative positions with these associated feature points Fn1 to Fn3. Moreover, each of the feature points Fn1 to Fn5 of the new image Pn includes imaging situation information such as imaging time information and an imaging posture. The new image Pn including these pieces of information may be stored on the storage unit 35 as an existing image.

As Step S7, the worker A manually operates the operation unit 32 to give an instruction to the selection unit 46, or the selection unit 46 automatically selects a work target object to guide its scheduled installation position for the worker A, from among a plurality of objects stored on the storage unit 35.

In this regard, the display control unit 45 may, based on absolute position information of the imaging position of the new image, suggest a work target object in the selection unit 46 that should be selected by the worker A on the display unit 33 to reduce the worker A's burden. This processing allows comparison of information of scheduled installation positions provided for work target objects with the position information of the imaging position of the new image, and suggestion of a work target object having a little difference.

In addition, the selection unit 46 may, based on the position information of the imaging position of the new image, automatically select a work target object that should be selected. Comparison of the position information of the scheduled installation positions provided for the work target objects with the position information of the imaging position of the new image as above allows an automatic selection of a work target object having a little difference.

The selected work target object includes, or is linked with, position information indicating its scheduled installation position. Thus, as Step S8, the guide calculation unit 47 calculates a difference between the imaging position of the new image and the scheduled installation position of the selected work target object.

As Step 9, the guide calculation unit 47 outputs information of a guide to the scheduled installation position with the current position being regarded as the imaging position of the new image, in accordance with the difference calculated in Step 8. Various methods can be used for output of specific guide information.

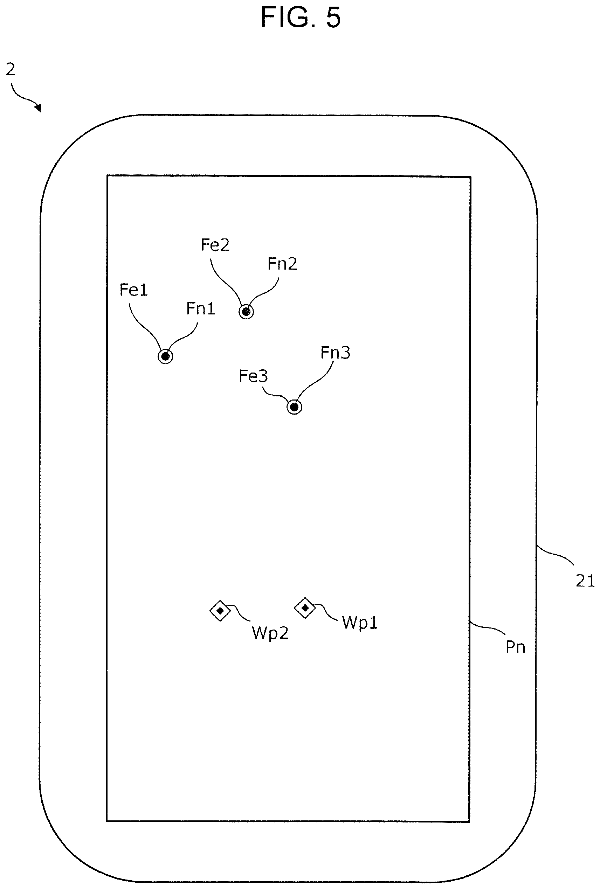

For example, FIG. 5 shows an example of the new image Pn displayed on the display unit 33 of the guide terminal 2. This figure displays scheduled installation positions wp1, wp2 of the work target objects on the new image Pn. Such overlapped display of the scheduled installation positions on the new image may be used as the guide information.

To output such guide information, the display control unit 45 compares positions within the imaging range in the absolute coordinate system or the coordinate system specific to the work site calculated by the imaging range calculation unit 48 with positions of the scheduled installation positions of the work target objects, and if the scheduled installation positions of the work target objects are included in the imaging range, overlappingly displays the work target objects on positions corresponding to the scheduled installation positions of the work target objects on the new image displayed on the display unit 33.

As Step S9, once the guide calculation unit 47 outputs the guide information, this routine is returned.

As described above, the guide system 1, the guide terminal 2, the guide method, and the guide program according to the present embodiment do not directly use a surveying apparatus, etc., but utilize existing feature points having known highly-accurate position information obtained using a surveying apparatus, etc., beforehand, and match feature points acquired by capturing a new image with the existing feature points to calculate an imaging position of the new image, thereby allowing guide of a work target position based on this imaging position. This enables the worker to intuitively and instantly understand a work target place from the worker's perspective while ensuring a high position accuracy in the absolute coordinate system or the coordinate system specific to the work site.

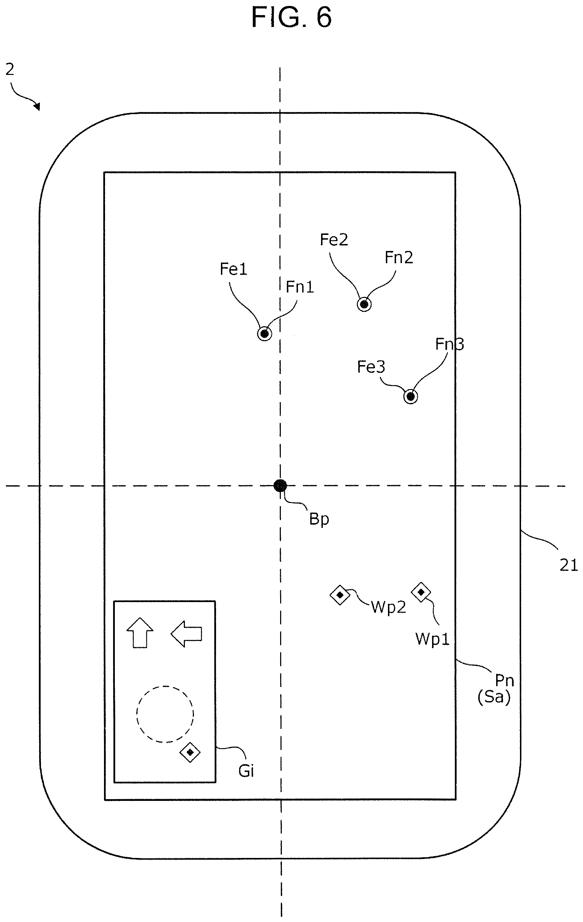

FIG. 6 also shows an application example of the guide system and the guide method shown in FIG. 3.

This application example may calculate absolute positions of a capturing range of a new image, and when the position of a work target object should be matched to a given point in the new image, which may, for example, be the center of the new image, calculate a difference between a scheduled installation position and the given point in the new image to output guide information to bring the given point close to the scheduled installation position.

In this case, the guide terminal 2 uses the display unit 33, which displays a new image captured with the imaging unit 30, and the imaging range calculation unit 48, which calculates absolute positions of an imaging range of the new image by using absolute position information of an imaging position and an imaging posture of the new image, to compare the absolute positions of the imaging range with an absolute position of a scheduled installation position of a work target object, and if the scheduled installation position of the work target object is included in the imaging range, overlappingly displays the work target object on a position corresponding to the scheduled installation position of the work target object on the new image displayed on the display unit 33.

This allows checking of a current situation of the work site visually observed by the naked eye of the worker with the scheduled installation position of the work target object overlappingly displayed on the display unit 33 to enable the worker to further easily and intuitively recognize the work target position in the real space.

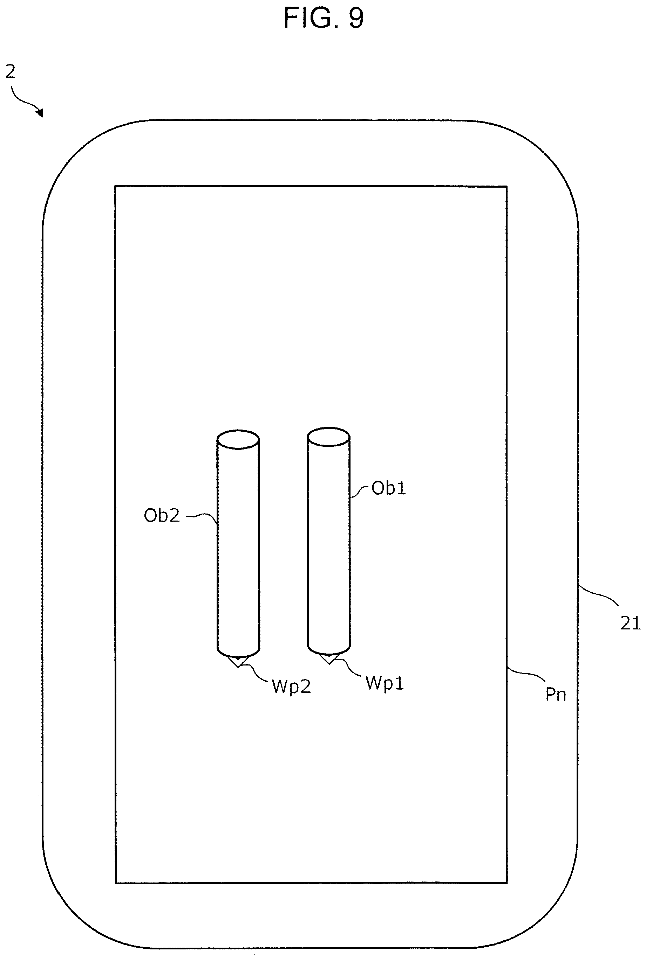

FIG. 9 also shows an application example of the guide system and the guide method shown in FIG. 3.

This application example may allow work target objects Wp 1 to 2 to be displayed on the display unit 33 while including spatial sizes of the objects, if the work target objects are objects having spatial sizes such as a post and a building material. At this time, scales of the displayed objects may be corrected using a distance between the imaging position and the work target position.

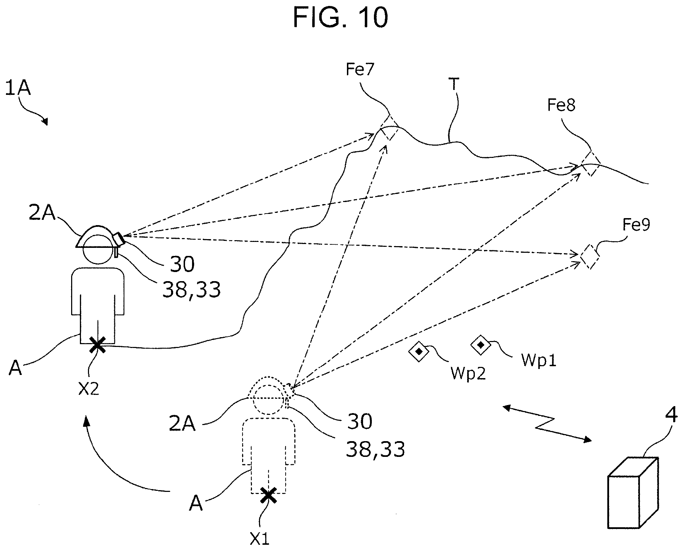

In addition, FIG. 10 shows a configuration diagram of a guide system according to a modification, and a guide system 1A of the modification is described based on this figure.

A guide terminal 2A in the modification, which is a wearable apparatus having a body part that can be on the head of the worker A, includes the display unit 33, which is a head mounted display (HMD) capable of so-called mixed reality (MR) display. The imaging unit 30 is provided in correspondence with an attachment position of the display unit 33 to image the same direction as an orientation direction of the worker A. Other configurations are the same as those of the above-described embodiment, and descriptions will be omitted.

In addition, the voice unit 38 is included as a means of outputting the guide information. The voice unit 38, which may, for example, be a speaker, can output the guide information to the worker A with a voice.

The guide system 1A in the modification causes, for example, the imaging unit 30 to capture a moving image, and the control unit 36 (not shown) to update the feature point DB in real time, thereby allowing MR display of a three-dimensional image on the display unit 33.

With configurations as above, the worker A wears the guide terminal 2A on his/her head, and only looks around the surroundings while moving in the site, the feature point DB is updated. For example, imaging of feature points Fe7 to Fe9, which were captured in the past at X1 and linked with position information, from other locations allows specification of X2, which is the current position. Based on the updated feature points, an image captured from X2 is used to update the three-dimensional image, and this can be confirmed in real-time through the display unit 33. This allows further easier confirmation of the work site and recognition of topographic conditions.

Thus, the guide system 1A, the guide terminal 2A, and the guide method and the guide program utilizing the guide system 1A can efficiently manage work by the worker A.

Moreover, although the guide system 1A is constructed with the guide terminal 2A alone in the above-described embodiment and modification, not limited to such a configuration, an external apparatus may have some configurations. For example, the feature point DB may be constructed with a storage unit provided for an external management server. In this case, the management server and one or a plurality of data management apparatuses are connected in a mutually communicable manner. A data management system having such a configuration allows easier sharing of the feature point DB with a plurality of guide terminals, and further easier confirmation of the work site and recognition of topographic conditions.

Although descriptions of embodiments of the present disclosure are concluded, embodiments of the present disclosure are not limited thereto.

### Reference Signs List

- 1: guide system
- 2: guide terminal
- 21: body part
- 22: rod-shaped part
- 23: prism
- 30: imaging unit
- 31: posture detection unit
- 32: operation unit
- 33: display unit
- 34: communication unit
- 35: storage unit
- 36: control unit
- 40: feature extraction unit
- 41: feature matching unit
- 42: imaging position calculation unit
- 43: differential feature specification unit
- 44: DB updating unit
- 45: display control unit

## Claims

1. A guide system (1) to assist a worker with work in a work site, comprising:
a storage unit (35) for storing design information including position information of scheduled installation positions (Wp1, Wp2) of a plurality of objects or points, which are elements constituting a building to be constructed in the work site, and a plurality of existing feature points and position information of a site reference object (T) to be used as a reference of a position in the work site acquired as a result of a survey by a surveying apparatus (5); and
a guide terminal (2) held by the worker having an imaging unit (30) for capturing a new image (Pn), and a posture detection unit (31) for detecting imaging direction information of the new image,
the guide terminal (2) including:
a feature extraction unit (40) extracting a plurality of feature points from the new image;
a feature matching unit (41) using the plurality of feature points (Fn1 to Fn5) included in the new image to extract a predetermined number or more common feature points (Fn1 to Fn3), which are in common with the feature points (Fe1 to Fe3), from among the plurality of existing feature points stored on the storage unit for association;
an imaging position calculation unit (42) using position information of the common feature points, which are associated, and the new image, to calculate position information of an imaging position and an imaging posture of the new image;
a selection unit (46) for selecting a work target object (Wp1, Wp2) or a work target point that should be guided as to its scheduled installation position from among the plurality of objects or points stored on the storage unit; and
a guide calculation unit (47) for outputting, to the worker (A), based on the position information of the scheduled installation position of the work target object or the work target point, which is selected, and the position information of an imaging position and the imaging posture of the new image, guide information from the imaging position of the new image to the scheduled installation position of the work target object or the work target point, wherein the guide terminal (2) further comprises:
a display unit (33) for displaying a new image (Pn) captured with the imaging unit (30);
an imaging range calculation unit (48) for calculating an imaging range of the new image in an absolute coordinate system or a coordinate system specific to the work site by using the position information of the imaging position and the imaging posture of the new image (Pn); and
a display control unit (45) for comparing positions within the imaging range with a position of the scheduled installation position of the work target object (Wp1, Wp2) or the work target point, and if the scheduled installation position of the work target object or the work target point is included in the imaging range, overlappingly displaying the work target object or the work target point on a position corresponding to the scheduled installation position of the work target object or the work target point on the new image displayed on the display unit (33).

2. The guide system according to claim 1, wherein
the display control unit (45) uses the position information of the scheduled installation position of the work target object (Wp1, Wp2) or the work target point and position information of a given point in the imaging range of the new image (Pn) in the absolute coordinate system or the coordinate system specific to the work site to calculate a difference between the given point in the imaging range and the scheduled installation position of the work target object (Wp1, Wp2) or the work target point, and based on the difference, outputs, to the worker, the guide information to guide from the imaging position of the new image (Pn) to the scheduled installation position of the work target object or the work target point.

3. The guide system according to claim 1 or 2, wherein the display control unit (45) suggests, on the display unit (33), the work target object or the work target point, which should be selected by the worker in the selection unit (46), based on the position information of the imaging position of the new image (Pn).

4. The guide system according to claim 1 or 2, wherein the selection unit (46) automatically selects the work target object or the work target point, which should be selected, based on the position information of the imaging position of the new image (Pn).

5. The guide system according to claim 1, wherein the guide terminal (2) further comprises a voice unit (38) for issuing a voice, and the voice unit outputs the guide information output by the guide calculation unit (47) with a voice.

6. A guide method of assisting a worker with work in a work site, comprising steps of:
storing, on a storage unit (35), design information including a plurality of objects or points, which are elements constituting a building to be constructed in the work site, and position information of their scheduled installation positions (Wp1, Wp2), and a plurality of existing feature points and position information of a site reference object to be used as a reference of a position in the work site acquired as a result of a survey by a surveying apparatus;
capturing a new image (Pn) with a guide terminal (2) having an imaging unit (30) used by the worker;
extracting a plurality of feature points (Fn1 to Fn5) from the new image with a feature extraction unit (40);
matching features, with a feature matching unit (41), by using the plurality of feature points (Fn1 to Fn5) included in the new image to extract a predetermined number or more common feature points (Fe1 to Fe3), which are in common with the feature points (Fn1 to Fn5) included in the new image, from among the plurality of existing feature points stored on the storage unit (35) for association;
calculating, with an imaging position calculation unit (42), position information of an imaging position and an imaging posture of the new image by using position information of the common feature points, which are associated, and the new image;
selecting, with a selection unit (46), a work target object or a work target point that should be guided as to its scheduled installation position from among the plurality of objects or points stored on the storage unit (35); and
guiding by outputting, with a guide calculation unit (47), to the worker, based on absolute position information of the scheduled installation position of the work target object or the work target point, which is selected, and the position information of an imaging position and the imaging posture of the new image, guide information from the imaging position of the new image to the scheduled installation position of the work target object or the work target point, further comprising the steps of
displaying, with a display unit, the new image;
calculating, with an imaging range calculation unit (48), an imaging range of the new image in an absolute coordinate system or a coordinate system specific to the work site by using the position information of the imaging position and the imaging posture of the new image; and
comparing, with a display control unit (45), positions within the imaging range with a position of the scheduled installation position of the work target object or the work target point, and if the scheduled installation position of the work target object or the work target point is included in the imaging range, overlappingly displaying the work target object or the work target point on a position corresponding to the scheduled installation position of the work target object or the work target point on the new image.

7. A guide program to be installed into a guide terminal (2) held by a worker in a guide system to assist the worker with work in a work site, the guide program causing a computer to execute steps of:
storing, on a storage unit (35), a plurality of existing feature points and position information of a site reference object to be used as a reference of a position in the work site acquired as a result of a survey by a surveying apparatus;
acquiring a new image captured with a guide terminal (2) having an imaging unit (30) used by the worker;
extracting a plurality of feature points (Fn1 to Fn5) from the new image with a feature extraction unit (40);
matching features, with a feature matching unit (41), by using the plurality of feature points (Fn1 to Fn5) included in the new image to extract a predetermined number or more common feature points (Fe1 to Fe3), which are in common with the feature points included in the new image, from among the plurality of existing feature points stored on the storage unit (35) for association;
calculating, with an imaging position calculation unit (42), absolute position information of an imaging position and an imaging posture of the new image by using position information of the common feature points, which are associated, and the new image;
selecting, with a selection unit (46), a work target object (Wp1, Wp2) that should be guided as to its scheduled installation position from among the plurality of objects or points stored on the storage unit (35); and
guiding by outputting, with a guide calculation unit (47), to the worker, based on absolute position information of the scheduled installation position of the work target object or a work target point, which is selected, and the position information of an imaging position and the imaging posture of the new image, guide information from the imaging position of the new image to the scheduled installation position of the work target object or the work target point, further comprising the steps of
displaying, with a display unit, the new image;
calculating, with an imaging range calculation unit (48), an imaging range of the new image in an absolute coordinate system or a coordinate system specific to the work site by using the position information of the imaging position and the imaging posture of the new image; and
comparing, with a display control unit (45), positions within the imaging range with a position of the scheduled installation position of the work target object or the work target point, and if the scheduled installation position of the work target object or the work target point is included in the imaging range, overlappingly displaying the work target object or the work target point on a position corresponding to the scheduled installation position of the work target object or the work target point on the new image.

## Patentansprüche

1. Führungssystem (1) zur Unterstützung eines Arbeiters bei Arbeit an einer Arbeitsstelle, aufweisend:
eine Speichereinheit (35) zum Speichern von Konstruktionsinformationen, die Positionsinformationen von geplanten Installationspositionen (Wp1, Wp2) einer Mehrzahl von Objekten oder Punkten, die Elemente sind, die ein an der Arbeitsstelle zu konstruierendes Gebäude bilden, sowie einer Mehrzahl von vorhandenen Merkmalspunkten und Positionsinformationen eines Arbeitsstellenreferenzobjekts (T), das als Referenz einer Position an der Arbeitsstelle zu verwenden ist, die als Ergebnis einer Vermessung durch eine Vermessungsvorrichtung (5) erfasst worden sind, aufweisen; und
ein von dem Arbeiter gehaltenes Führungsendgerät (2) mit einer Bildaufnahmeeinheit (30) zum Aufnehmen eines neuen Bildes (Pn) und einer Haltungsdetektionseinheit (31) zum Detektieren von Bildaufnahmerichtungsinformationen des neuen Bildes,
wobei das Führungsendgerät (2) aufweist:
eine Merkmalsextraktionseinheit (40), die eine Mehrzahl von Merkmalspunkten aus dem neuen Bild extrahiert;
eine Merkmalsabgleichseinheit (41), die die in dem neuen Bild enthaltene Mehrzahl von Merkmalspunkten (Fn1 bis Fn5) verwendet, um eine vorbestimmte Anzahl oder mehr gemeinsamer Merkmalspunkte (Fn1 bis Fn3), die mit den Merkmalspunkten (Fe1 bis Fe3) übereinstimmen, aus der Mehrzahl von vorhandenen in der Speichereinheit gespeicherten Merkmalspunkten zur Zuordnung zu extrahieren;
eine Bildaufnahmepositionsberechnungseinheit (42), die Positionsinformationen der zugeordneten gemeinsamen Merkmalspunkte und des neuen Bildes verwendet, um Positionsinformationen einer Bildaufnahmeposition und einer Bildaufnahmehaltung des neuen Bildes zu berechnen;
eine Auswahleinheit (46) zum Auswählen eines Arbeitszielobjekts (Wp1, Wp2) oder eines Arbeitszielpunkts, das bzw. der geführt werden soll, hinsichtlich seiner geplanten Installationsposition, aus der Mehrzahl von Objekten oder Punkten, die in der Speichereinheit gespeichert sind; und
eine Führungsberechnungseinheit (47) zum Ausgeben von Führungsinformationen von der Bildaufnahmeposition des neuen Bildes aus zu der geplanten Installationsposition des Arbeitszielobjekts oder des Arbeitszielpunkts an den Arbeiter (A) auf der Grundlage der Positionsinformationen der geplanten Installationsposition des ausgewählten Arbeitszielobjekts oder Arbeitszielpunkts sowie der Positionsinformationen einer Bildaufnahmeposition und der Bildaufnahmehaltung des neuen Bildes, wobei das Führungsendgerät (2) ferner aufweist:
eine Anzeigeeinheit (33) zum Anzeigen eines mit der Bildaufnahmeeinheit (30) aufgenommenen neuen Bildes (Pn);
eine Bildaufnahmebereichsberechnungseinheit (48) zum Berechnen eines Bildaufnahmebereichs des neuen Bildes in einem absoluten Koordinatensystem oder einem für die Arbeitsstelle spezifischen Koordinatensystem durch Verwendung der Positionsinformationen der Bildaufnahmeposition und der Bildaufnahmehaltung des neuen Bildes (Pn); und
eine Anzeigesteuereinheit (45) zum Vergleichen von Positionen in dem Bildaufnahmebereich mit einer Position der geplanten Installationsposition des Arbeitszielobjekts (Wp1, Wp2) oder des Arbeitszielpunkts und, wenn die geplante Installationsposition des Arbeitszielobjekts oder des Arbeitszielpunkts in dem Bildaufnahmebereich enthalten ist, zum überlappenden Anzeigen des Arbeitszielobjekts oder des Arbeitszielpunkts an einer Position, die der geplanten Installationsposition des Arbeitszielobjekts oder des Arbeitszielpunkts entspricht, in dem auf der Anzeigeeinheit (33) angezeigten neuen Bild.

2. Führungssystem nach Anspruch 1, wobei die Anzeigesteuereinheit (45) die Positionsinformationen der geplanten Installationsposition des Arbeitszielobjekts (Wp1, Wp2) oder des Arbeitszielpunkts sowie Positionsinformationen eines gegebenen Punktes in dem Bildaufnahmebereich des neuen Bildes (Pn) in dem absoluten Koordinatensystem oder in dem für die Arbeitsstelle spezifischen Koordinatensystem verwendet, um eine Differenz zwischen dem gegebenen Punkt in dem Bildaufnahmebereich und der geplanten Installationsposition des Arbeitszielobjekts (Wp1, Wp2) oder des Arbeitszielpunkts zu berechnen, und auf der Grundlage der Differenz dem Arbeiter die Führungsinformationen ausgibt, um von der Bildaufnahmeposition des neuen Bildes (Pn) aus zu der geplanten Installationsposition des Arbeitsobjekts oder des Arbeitspunkts zu führen.

3. Führungssystem nach Anspruch 1 oder 2, wobei die Anzeigesteuereinheit (45) auf der Anzeigeeinheit (33) das Arbeitszielobjekt oder den Arbeitszielpunkt, das bzw. der von dem Arbeiter in der Auswahleinheit (46) ausgewählt werden soll, auf Grundlage der Positionsinformationen der Bildaufnahmeposition des neuen Bildes (Pn) vorschlägt.

4. Führungssystem nach Anspruch 1 oder 2, wobei die Auswahleinheit (46) automatisch das Arbeitszielobjekt oder den Arbeitszielpunkt, das bzw. der ausgewählt werden soll, auf der Grundlage der Positionsinformationen der Bildaufnahmeposition des neuen Bildes (Pn) auswählt.

5. Führungssystem nach Anspruch 1, wobei das Führungsendgerät (2) ferner eine Spracheinheit (38) zum Ausgeben von Sprache aufweist und die Spracheinheit die von der Führungsberechnungseinheit (47) ausgegebenen Führungsinformationen per Sprache ausgibt.

6. Führungsverfahren zur Unterstützung eines Arbeiters bei Arbeit an einer Arbeitsstelle, das folgende Schritte aufweist:
Speichern von Konstruktionsinformationen, die eine Mehrzahl von Objekten oder Punkten enthalten, die Elemente eines an der Arbeitsstelle zu konstruierenden Gebäudes bilden, und Positionsinformationen von deren geplanten Installationspositionen (Wp1, Wp2) sowie einer Mehrzahl von vorhandenen Merkmalspunkten und Positionsinformationen eines Arbeitsstellenreferenzobjekts, das als Referenz einer Position an der Arbeitsstelle zu verwenden ist, die als Ergebnis einer Vermessung durch eine Vermessungsvorrichtung erfasst worden sind, in einer Speichereinheit (35);
Aufnehmen eines neuen Bildes (Pn) mit einem von dem Arbeiter verwendeten Führungsendgerät (2), das eine Bildaufnahmeeinheit (30) aufweist;
Extrahieren einer Mehrzahl von Merkmalspunkten (Fn1 bis Fn5) aus dem neuen Bild mittels einer Merkmalsextraktionseinheit (40);
Abgleichen von Merkmalen mittels einer Merkmalsabgleichseinheit (41) durch Verwendung der in dem neuen Bild enthaltenen Mehrzahl von Merkmalspunkten (Fn1 bis Fn5), um eine vorbestimmte Anzahl oder mehr gemeinsame Merkmalspunkte (Fn1 bis Fn3), die mit den Merkmalspunkten (Fe1 bis Fe5), die in dem neuen Bild enthalten sind, übereinstimmen, aus der Mehrzahl von vorhandenen in der Speichereinheit (35) gespeicherten Merkmalspunkten zur Zuordnung zu extrahieren;
Berechnen von Positionsinformationen einer Bildaufnahmeposition und einer Bildaufnahmehaltung des neuen Bildes mittels einer Bildaufnahmepositionsberechnungseinheit (42) durch Verwendung von Positionsinformationen der zugeordneten gemeinsamen Merkmalspunkte und des neuen Bildes;
Auswählen eines Arbeitszielobjekts oder eines Arbeitszielpunkts, der bzw. das geführt werden soll, hinsichtlich seiner geplanten Installationsposition mittels einer Auswahleinheit (46) aus der Mehrzahl von in der Speichereinheit (35) gespeicherten Objekten oder Punkten; und
Führen durch Ausgeben von Führungsinformationen von der Bildaufnahmeposition des neuen Bildes aus zu der geplanten Installationsposition des Arbeitszielobjekts oder des Arbeitszielpunkts an den Arbeiter mittels einer Führungsberechnungseinheit (47) auf der Grundlage von absoluten Positionsinformationen der geplanten Installationsposition des ausgewählten Arbeitszielobjekts oder Arbeitszielpunkts sowie Positionsinformationen einer Bildaufnahmeposition und der Bildaufnahmehaltung des neuen Bildes, ferner aufweisend die folgenden Schritte:
Anzeigen des neuen Bildes mittels einer Anzeigeeinheit;
Berechnen eines Bildaufnahmebereichs des neuen Bildes in einem absoluten Koordinatensystem oder einem für die Arbeitsstelle spezifischen Koordinatensystem durch Verwendung der Positionsinformationen der Bildaufnahmeposition und der Bildaufnahmehaltung des neuen Bildes mittels einer Bildaufnahmebereichsberechnungseinheit (48); und
Vergleichen von Positionen in dem Bildaufnahmebereich mit einer Position der geplanten Installationsposition des Arbeitszielobjekts oder des Arbeitszielpunkts mittels einer Anzeigesteuereinheit (45) und, wenn die geplante Installationsposition des Arbeitszielobjekts oder des Arbeitszielpunkts in dem Bildaufnahmebereich enthalten ist, überlappendes Anzeigen des Arbeitszielobjekts oder des Arbeitszielpunkts an einer Position, die der geplanten Installationsposition des Arbeitszielobjekts oder des Arbeitszielpunkts entspricht, in dem neuen Bild.

7. Führungsprogramm zur Installation in einem Führungsendgerät (2), das in einem Führungssystem von einem Arbeiter gehalten wird, um den Arbeiter bei Arbeit an einer Arbeitsstelle zu unterstützen, wobei das Führungsprogramm einen Computer veranlasst, folgende Schritte auszuführen:
Speichern einer Mehrzahl von vorhandenen Merkmalspunkten und Positionsinformationen eines Arbeitsstellenreferenzobjekts, das als Referenz einer Position an der Arbeitsstelle zu verwenden ist, die als Ergebnis einer Vermessung durch eine Vermessungsvorrichtung erfasst worden sind, in einer Speichereinheit (35);
Erfassen eines neuen Bildes, das mit einem von dem Arbeiter verwendeten Führungsendgerät (2) aufgenommen worden ist, das eine Bildaufnahmeeinheit (30) aufweist;
Extrahieren einer Mehrzahl von Merkmalspunkten (Fn1 bis Fn5) aus dem neuen Bild mittels einer Merkmalsextraktionseinheit (40);
Abgleichen von Merkmalen mittels einer Merkmalsabgleichseinheit (41) durch Verwendung der in dem neuen Bild enthaltenen Mehrzahl von Merkmalspunkten (Fn1 bis Fn5), um eine vorbestimmte Anzahl oder mehr gemeinsame Merkmalspunkte (Fn1 bis Fn3), die mit den Merkmalspunkten, die in dem neuen Bild enthalten sind, übereinstimmen, aus der Mehrzahl von vorhandenen in der Speichereinheit (35) gespeicherten Merkmalspunkten zur Zuordnung zu extrahieren;
Berechnen von absoluten Positionsinformationen einer Bildaufnahmeposition und einer Bildaufnahmehaltung des neuen Bildes mittels einer Bildaufnahmepositionsberechnungseinheit (42) durch Verwendung von Positionsinformationen der zugeordneten gemeinsamen Merkmalspunkte und des neuen Bildes;
Auswählen eines Arbeitszielobjekts (Wp1, Wp2), das geführt werden soll, hinsichtlich seiner geplanten Installationsposition mittels einer Auswahleinheit (46) aus der Mehrzahl von in der Speichereinheit (35) gespeicherten Objekten oder Punkten; und
Führen durch Ausgeben von Führungsinformationen von der Bildaufnahmeposition des neuen Bildes aus zu der geplanten Installationsposition des Arbeitszielobjekts oder des Arbeitszielpunkts an den Arbeiter mittels einer Führungsberechnungseinheit (47) auf der Grundlage von absoluten Positionsinformationen der geplanten Installationsposition des ausgewählten Arbeitszielobjekts oder Arbeitszielpunkts sowie Positionsinformationen einer Bildaufnahmeposition und der Bildaufnahmehaltung des neuen Bildes, ferner aufweisend die folgenden Schritte:
Anzeigen des neuen Bildes mittels einer Anzeigeeinheit;
Berechnen eines Bildaufnahmebereichs des neuen Bildes mittels einer Bildaufnahmebereichsberechnungseinheit (48) in einem absoluten Koordinatensystem oder einem für die Arbeitsstelle spezifischen Koordinatensystem durch Verwendung der Positionsinformationen der Bildaufnahmeposition und der Bildaufnahmehaltung des neuen Bildes; und
Vergleichen von Positionen in dem Bildaufnahmebereich mit einer Position der geplanten Installationsposition des Arbeitszielobjekts oder des Arbeitszielpunkts mittels einer Anzeigesteuereinheit (45) und, wenn die geplante Installationsposition des Arbeitszielobjekts oder des Arbeitszielpunkts in dem Bildaufnahmebereich enthalten ist, überlappendes Anzeigen des Arbeitszielobjekts oder des Arbeitszielpunkts an einer Position, die der geplanten Installationsposition des Arbeitszielobjekts oder des Arbeitszielpunkts entspricht, in dem neuen Bild.

## Revendications

1. Système de guidage (1) pour assister un opérateur lors de travaux sur un chantier, comprenant :
une unité de stockage (35) destinée à stocker des informations de conception comprenant des informations de position de positions d'installation prévues (Wp1, Wp2) d'une pluralité d'objets ou de points, qui sont des éléments constituant un bâtiment devant être construit sur le chantier, ainsi qu'une pluralité de points caractéristiques existants et des informations de position d'un objet de référence de chantier (T) destiné à être utilisé comme référence de position sur le chantier, acquises à la suite d'un levé effectué par un appareil de levé (5) ; et
un terminal de guidage (2) tenu par l'opérateur, comprenant une unité de prise de vue (30) destinée à capturer une nouvelle image (Pn), et une unité de détection de posture (31) destinée à détecter des informations de direction de prise de vue de la nouvelle image,
le terminal de guidage (2) comprenant :
une unité d'extraction de caractéristiques (40) destinée à extraire une pluralité de points caractéristiques à partir de la nouvelle image ;
une unité de mise en correspondance de caractéristiques (41) destinée, à l'aide de la pluralité de points caractéristiques (Fn1 à Fn5) comprise dans la nouvelle image, à extraire un nombre prédéterminé ou plus de points caractéristiques communs (Fn1 à Fn3), qui sont communs avec les points caractéristiques (Fe1 à Fe3), parmi la pluralité de points caractéristiques existants stockés dans l'unité de stockage pour une association ;
une unité de calcul de position de prise de vue (42) destinée, à l'aide des informations de position des points caractéristiques communs, qui sont associés, et de la nouvelle image, à calculer des informations de position d'une position de prise de vue et une posture de prise de vue de la nouvelle image ;
une unité de sélection (46) destinée à sélectionner un objet cible de travail (Wp1, Wp2) ou un point cible de travail devant être guidé quant à sa position d'installation prévue parmi la pluralité d'objets ou de points stockés dans l'unité de stockage ; et
une unité de calcul de guidage (47) destinée à fournir, à l'opérateur (A), sur la base des informations de position de la position d'installation prévue de l'objet cible de travail ou du point cible de travail, qui est sélectionné, et des informations de position d'une position de prise de vue et de la posture de prise de vue de la nouvelle image, des informations de guidage depuis la position de prise de vue de la nouvelle image jusqu'à la position d'installation prévue de l'objet cible de travail ou du point cible de travail, le terminal de guidage (2) comprenant en outre :
une unité d'affichage (33) destinée à afficher une nouvelle image (Pn) capturée par l'unité de prise de vue (30) ;
une unité de calcul de champ de prise de vue (48) destinée à calculer un champ de prise de vue de la nouvelle image dans un système de coordonnées absolues ou un système de coordonnées spécifique au chantier à l'aide des informations de position de la position de prise de vue et de la posture de prise de vue de la nouvelle image (Pn) ; et
une unité de commande d'affichage (45) destinée à comparer des positions dans le champ de prise de vue avec une position de la position d'installation prévue de l'objet cible de travail (Wp1, Wp2) ou du point cible de travail, et, si la position d'installation prévue de l'objet cible de travail ou du point cible de travail est incluse dans le champ de prise de vue, à afficher en superposition l'objet cible de travail ou le point cible de travail à une position correspondant à la position d'installation prévue de l'objet cible de travail ou du point cible de travail sur la nouvelle image affichée sur l'unité d'affichage (33).

2. Système de guidage selon la revendication 1, dans lequel
l'unité de commande d'affichage (45) utilise les informations de position de la position d'installation prévue de l'objet cible de travail (Wp1, Wp2) ou du point cible de travail et des informations de position d'un point donné dans le champ de prise de vue de la nouvelle image (Pn) dans le système de coordonnées absolues ou le système de coordonnées spécifique au chantier pour calculer une différence entre le point donné dans le champ de prise de vue et la position d'installation prévue de l'objet cible de travail (Wp1, Wp2) ou du point cible de travail, et, sur la base de cette différence, fournit à l'opérateur les informations de guidage pour guider depuis la position de prise de vue de la nouvelle image (Pn) jusqu'à la position d'installation prévue de l'objet cible de travail ou du point cible de travail.

3. Système de guidage selon l'une quelconque des revendications 1 ou 2, dans lequel l'unité de commande d'affichage (45) suggère, sur l'unité d'affichage (33), l'objet cible de travail ou le point cible de travail devant être sélectionné par l'opérateur dans l'unité de sélection (46), sur la base des informations de position de la position de prise de vue de la nouvelle image (Pn).

4. Système de guidage selon l'une quelconque des revendications 1 ou 2, dans lequel l'unité de sélection (46) sélectionne automatiquement l'objet cible de travail ou le point cible de travail devant être sélectionné, sur la base des informations de position de la position de prise de vue de la nouvelle image (Pn).

5. Système de guidage selon la revendication 1, dans lequel le terminal de guidage (2) comprend en outre une unité vocale (38) destinée à émettre une voix, et l'unité vocale délivre sous forme vocale les informations de guidage fournies par l'unité de calcul de guidage (47).

6. Procédé de guidage pour assister un opérateur lors de travaux sur un chantier, comprenant les étapes consistant à :
stocker, dans une unité de stockage (35), des informations de conception comprenant une pluralité d'objets ou de points, qui sont des éléments constituant un bâtiment devant être construit sur le chantier, et des informations de position de leurs positions d'installation prévues (Wp1, Wp2), ainsi qu'une pluralité de points caractéristiques existants et des informations de position d'un objet de référence de chantier destiné à être utilisé comme référence de position sur le chantier, acquises à la suite d'un levé effectué par un appareil de levé ;
capturer une nouvelle image (Pn) à l'aide d'un terminal de guidage (2) comprenant une unité de prise de vue (30) utilisée par l'opérateur ;
extraction, à l'aide d'une unité d'extraction de caractéristiques (40), d'une pluralité de points caractéristiques (Fn1 à Fn5) à partir de la nouvelle image ;
mise en correspondance de caractéristiques, à l'aide d'une unité de mise en correspondance de caractéristiques (41), consistant à utiliser la pluralité de points caractéristiques (Fn1 à Fn5) comprise dans la nouvelle image pour extraire, parmi la pluralité de points caractéristiques existants stockés dans l'unité de stockage (35) pour une association, un nombre prédéterminé ou plus de points caractéristiques communs (Fe1 à Fe3), qui sont communs avec les points caractéristiques (Fn1 à Fn5) compris dans la nouvelle image ;
calcul, à l'aide d'une unité de calcul de position de prise de vue (42), d'informations de position d'une position de prise de vue et d'une posture de prise de vue de la nouvelle image à l'aide des informations de position des points caractéristiques communs, qui sont associés, et de la nouvelle image ;
sélection, à l'aide d'une unité de sélection (46), d'un objet cible de travail ou d'un point cible de travail devant être guidé quant à sa position d'installation prévue parmi la pluralité d'objets ou de points stockés dans l'unité de stockage (35) ; et
guidage consistant à délivrer, à l'aide d'une unité de calcul de guidage (47), à l'opérateur, sur la base d'informations de position absolues de la position d'installation prévue de l'objet cible de travail ou du point cible de travail, qui est sélectionné, et des informations de position d'une position de prise de vue et de la posture de prise de vue de la nouvelle image, des informations de guidage depuis la position de prise de vue de la nouvelle image jusqu'à la position d'installation prévue de l'objet cible de travail ou du point cible de travail, le procédé comprenant en outre les étapes consistant à :
afficher, à l'aide d'une unité d'affichage, la nouvelle image ;
calculer, à l'aide d'une unité de calcul de champ de prise de vue (48), un champ de prise de vue de la nouvelle image dans un système de coordonnées absolues ou un système de coordonnées spécifique au chantier à l'aide des informations de position de la position de prise de vue et de la posture de prise de vue de la nouvelle image ; et
comparer, à l'aide d'une unité de commande d'affichage (45), des positions dans le champ de prise de vue avec une position de la position d'installation prévue de l'objet cible de travail ou du point cible de travail, et, si la position d'installation prévue de l'objet cible de travail ou du point cible de travail est incluse dans le champ de prise de vue, afficher en superposition l'objet cible de travail ou le point cible de travail à une position correspondant à la position d'installation prévue de l'objet cible de travail ou du point cible de travail sur la nouvelle image.

7. Programme de guidage destiné à être installé dans un terminal de guidage (2) tenu par un opérateur dans un système de guidage pour assister l'opérateur lors de travaux sur un chantier, le programme de guidage amenant un ordinateur à exécuter des étapes consistant à :
stocker, dans une unité de stockage (35), une pluralité de points caractéristiques existants et des informations de position d'un objet de référence de chantier destiné à être utilisé comme référence de position sur le chantier, acquises à la suite d'un levé effectué par un appareil de levé ;
acquérir une nouvelle image capturée à l'aide d'un terminal de guidage un terminal de guidage (2) comprenant une unité de prise de vue (30) utilisée par l'opérateur ;
extraire, à l'aide d'une unité d'extraction de caractéristiques (40), une pluralité de points caractéristiques (Fn1 à Fn5) à partir de la nouvelle image ;
mettre en correspondance des caractéristiques, à l'aide d'une unité de mise en correspondance de caractéristiques (41), en utilisant la pluralité de points caractéristiques (Fn1 à Fn5) comprise dans la nouvelle image afin d'extraire, parmi la pluralité de points caractéristiques existants stockés dans l'unité de stockage (35) pour une association, un nombre prédéterminé ou plus de points caractéristiques communs (Fe1 à Fe3), qui sont communs avec les points caractéristiques comprises dans la nouvelle image ;
calculer, à l'aide d'une unité de calcul de position de prise de vue (42), des informations de position absolues d'une position de prise de vue et d'une posture de prise de vue de la nouvelle image à l'aide des informations de position des points caractéristiques communs, qui sont associés, et de la nouvelle image ;
sélectionner, à l'aide d'une unité de sélection (46), un objet cible de travail (Wp1, Wp2) devant être guidé quant à sa position d'installation prévue parmi la pluralité d'objets ou de points stockés dans l'unité de stockage (35) ; et
guidage consistant à délivrer, à l'aide d'une unité de calcul de guidage (47), à l'opérateur, sur la base d'informations de position absolues de la position d'installation prévue de l'objet cible de travail ou d'un point cible de travail, qui est sélectionné, et des informations de position d'une position de prise de vue et de la posture de prise de vue de la nouvelle image, des informations de guidage depuis la position de prise de vue de la nouvelle image jusqu'à la position d'installation prévue de l'objet cible de travail ou du point cible de travail, le procédé comprenant en outre les étapes consistant à :
afficher, à l'aide d'une unité d'affichage, la nouvelle image ;
calculer, à l'aide d'une unité de calcul de champ de prise de vue (48), un champ de prise de vue de la nouvelle image dans un système de coordonnées absolues ou un système de coordonnées spécifique au chantier à l'aide des informations de position de la position de prise de vue et de la posture de prise de vue de la nouvelle image ; et
comparer, à l'aide d'une unité de commande d'affichage (45), des positions dans le champ de prise de vue avec une position de la position d'installation prévue de l'objet cible de travail ou du point cible de travail, et, si la position d'installation prévue de l'objet cible de travail ou du point cible de travail est incluse dans le champ de prise de vue, afficher en superposition l'objet cible de travail ou le point cible de travail à une position correspondant à la position d'installation prévue de l'objet cible de travail ou du point cible de travail sur la nouvelle image.
